(19) Europäisches Patentamt
European Patent Office
Office Européen des brevets

(11) Publication number: 0 230 501 B1

# (12) EUROPEAN PATENT SPECIFICATION

(45) Date of publication of patent specification: 02.01.91 Bulletin 91/01

(51) Int. Cl.$^5$: C08L 81/04, C08L 101/00

(21) Application number: 86101286.2

(22) Date of filing: 31.01.86

## (54) Blends of organic polymers and organic terminated polysulfide polymers and method of sealing joints and cracks in concrete or asphalt therewith.

(43) Date of publication of application: 05.08.87 Bulletin 87/32

(45) Publication of the grant of the patent: 02.01.91 Bulletin 91/01

(84) Designated Contracting States: AT BE CH DE FR GB IT LI NL SE

(56) References cited:
EP-A- 0 006 698
US-A- 4 184 890
US-A- 4 438 259

(73) Proprietor: THE DOW CHEMICAL COMPANY
2030 Dow Center Abbott Road
Midland, MI 48640 (US)

(72) Inventor: Dergazarian, Thomas E.
4217 Bluebird Drive
Midland Michigan 48640 (US)
Inventor: Meyer, Victor E.
2212 Parkwood Drive
Midland Michigan 48640 (US)

(74) Representative: Weickmann, Heinrich, Dipl.-Ing. et al
Patentanwälte Dipl.-Ing. H.Weickmann Dipl.-Phys.Dr. K.Fincke Dipl.-Ing. F.A.Weickmann Dipl.-Chem. B. Huber Dr.-Ing. H. Liska Dipl.-Phys.Dr. J. Prechtel Postfach 860820
D-8000 München 86 (DE)

EP 0 230 501 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

This invention relates to blends of organic polymers and organic-terminated polysulfide polymers. The organic polymer may be a saturated organic elastomer, an ethylenically unsaturated organic elastomer, a non-elastomeric polymer, or any combination blend of the three. The organic-terminated polysulfide polymer may be curable, noncurable or any blend thereof.

Curable organic-terminated polysulfide polymers are useful as the primary ingredient or as an additive in sealants, adhesives and like compositions as well as for preparing diverse solid articles as gaskets, hoses, tubing and the like.

While such polysulfide polymers are generally quite suitable for these and other uses, it is often desirable to modify said polysulfide polymers in order to impart specific desirable properties thereto. For example, in a sealant or adhesive application it is often desirable to employ a polymer which has greater resilience and/or cohesive strength than is commonly exhibited by said polysulfide polymers, while maintaining the adhesion and resistance to water, solvents and ultraviolet light characteristic of polysulfide polymers.

Unfortunately, most conventional polysulfide polymers, particularly in the cured state, are insoluble in most solvents and incompatible with organic polymers. Accordingly, it is usually difficult to formulate such conventional polysulfide polymers with other polymers or even with common additives for polymeric compositions.

Accordingly it would be desirable to provide a polysulfide polymer composition which exhibits improved physical properties, particularly improved resilience, recovery, compression set, and lower modulus while maintaining general polysulfide properties.

In the building and maintenance of concrete or asphalt roads, sidewalks, highways, driveways, and the like, it is often required to employ a sealant to connect joints between adjacent segments of the structure or to repair cracks or small holes therein. Such sealants prevent the incursion of water, ice, sand, salts, oils, and the like into cracks and joints of the concrete or asphalt. Such sealants must exhibit several properties to be entirely satisfactory. The sealant must adhere well to concrete or asphalt. The sealant must also maintain its strength and adhesive properties over a wide range of temperatures and in dry as well as wet and icy conditions. In addition, the sealant is desirably resistant to UV light, ozone and organic liquids, such as gasoline and motor oil. Furthermore, the sealant must exhibit good cohesive strength and resilience and be capable of withstanding movements in the cement or asphalt substrate to which it is adhered.

The most commonly used sealants are asphalt-based sealants such as rubberized asphalt and coal tar sealants such as urethane-coal tar sealants and polyvinyl chloride-coal tar sealants. Such sealants are often poor in adhesion to the concrete or asphalt substrate and do not have a useful life that is as long as desired. In concrete highways, joints sealed with asphalt-based adhesives commonly fail within 3 to 6 months after application. Such early failure of the sealant leads to greatly decreased service life of the pavement.

In addition to poor adhesion, many conventional sealants also exhibit greater cohesive strength than adhesive strength. Accordingly, when the concrete or asphalt substrate moves slightly, the adhesive bond to the substrate is often ruptured.

It would be desirable to provide an adhesive for cement or asphalt structures which exhibits good adhesion to both concrete and asphalt structures, resistance to weather changes, and which forms a bond to the substrate which is not ruptured upon small movements of said substrate.

The present invention is a polymer composition comprising a blend of at least one organic-terminated polysulfide polymer and an organic polymer which is not an organic-terminated polysulfide, characterized in that said polysulfide polymer is represented by the general formulae

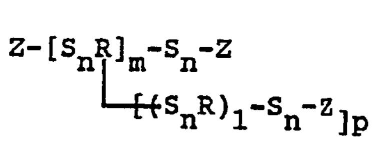 I or 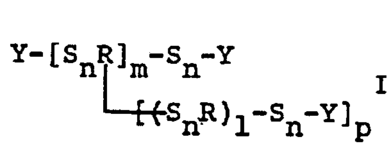 II

wherein n is a number from 2 to 8, l is zero or a positive integer, m is a positive integer, each R is independently an unsubstituted or inertly substituted organic polyradical with the radicals residing in carbon atoms, p is zero or a positive number which is the difference between the number of valence of R and 2, and each Y and Z are independently chosen from the class consisting of (vinylaryl)alkyl and inertly substituted noncross-linking monoradicals provided that at least a portion of Z is (vinylaryl)alkyl ; said organic polymer is an ethylenically unsaturated elastomer, a saturated organic elastomer that contains a saturated chain of the polymethylene type, a non-elastic organic polymer and a mixture thereof, and said organic terminated polysulfide polymer is present in an amount of from 1 to 99 percent by weight based on a total weight of the polymers in the blend.

Surprisingly, it has been found that such organic-terminated polysulfide polymer can be blended, even in the cured state, with an organic elastomer that contains a measurable amount of ethylenic unsaturation (i.e. nonconjugated carbon-carbon double bonds). Also surprising is that the resulting blends are stable and do not tend to phase separate or exhibit other undesirable characteristics of blends of incompatible polymers. These blends also exhibit improved physical properties such as tensile strength and resilience as compared to the corresponding organic-terminated polysulfide polymer alone. Thus, in one aspect the present invention is a blend of at least one aformentioned organic-terminated polysulfide polymer and an ethylenically unsaturated organic elastomer.

Another aspect of the invention is a polymer composition which comprises a blend of at least one aformentioned organic-terminated polysulfide polymer and a saturated organic elastomer. These blends with the saturated organic elastomers are stable and exhibit improved physical properties as compared to the organic-terminated polysulfide polymer alone.

In yet another aspect of the invention, at least one aforementioned organic-terminated polysulfide polymer is blended with a non-elastomeric organic polymer. These blends are also stable and exhibit improved physical properties as compared to the organic-terminated polysulfide polymer alone.

Still in another aspect, the present invention is an improved method for sealing cracks or joints in concrete or asphalt structure by applying thereto as a sealant the polymer composition of the present invention or the curable or noncurable organic-terminated polysulfide represented by the foregoing formulae I and II.

The composition of this invention comprises a blend of at least one organic-terminated polysulfide polymer (hereinafter "polysulfide polymer") and an organic polymer. The organic polymer is either an ethylenically unsaturated organic elastomer (hereinafter "unsaturated organic elastomer"), a saturated organic elastomer that contains a saturated chain of the polymethylene type, a non-elastomeric organic polymer or a blend of any combination of the three. The relative proportions of polysulfide polymer and organic polymer can be within any range wherein the polysulfide polymer and organic polymer are compatible. Compatibility for the purposes of this invention, is generally evidenced by a lack of phase separation in the blend. Generally, the blends of this invention contain from 1 to 99 weight percent polysulfide polymer, based on a total weight of the polymers in the blend.

The polysulfide polymer included herein is a polymer of a metal sulfide, a copolymerizable polyfunctional organic compound and a copolymerizable monofunctional compound which gives rise to unsubstituted or inertly substituted organic-terminal groups. Said monofunctional organic compound advantageously contains a (vinylaryl)alkyl moiety in which case the resulting polysulfide polymer will be curable. Alternatively, the monofunctional organic compound will not contain any vinyl unsaturation, and the resulting polysulfide will not be curable.

Suitable curable polysulfide polymers are described in U.S. Patent No. 4,438,259. Such a curable polysulfide polymer is a copolymer represented by the general formula.

$$\begin{array}{l} Z-[S_n\underset{|}{R}]_m-S_n-Z \\ \qquad\;\; \llcorner[(S_nR)_l-S_n-Z]_p \end{array} \qquad I$$

wherein n is a number from 2 to 8, l is zero or a positive number, m is a positive number, each R is independently an unsubstituted or inertly substituted organic polyradical with the radicals residing on carbon atoms, p is zero or a positive number which is the difference in the number of valence of R and 2, and each Z is independently chosen from the class consisting of (vinylaryl)alkyl and other inertly substituted non-crosslinking monoradicals, provided that a sufficient proportion of the terminal groups of said copolymer are (vinylaryl)alkyl so that said copolymers are curable.

In said curable elastomeric polysulfide, the terminal group Z is preferably an unsubstituted or inertly substituted vinylbenzyl group or a mixture thereof with an unsubstituted or inertly substituted non-crosslinking group, particularly a benzyl group. For the purpose of the invention, "inertly substituted" means that the

radical contains no moieties which interfere with the preparation of subsequent curing of the elastomer.

The polyradicals are polyfunctional organic radicals in which the radicals reside on carbon atoms, i.e., the adjacent polysulfide linkages are bonded to a carbon atom on the organic polyradical. The R groups may be hydrocarbon, such as ethylene, propylene and like radicals, may contain hetero atoms such as ether linkages or may contain other inert substituent groups.

In the polysulfide linkages $S_n$, the sulfur link or average length of the sulfur chain is from 2 to 8, and is preferably from 2 to 5 sulfur atoms.

Of the foregoing structural components of the polymer, the polysulfide linkages are primarily responsible for properties such as good adhesion and resistance to water, resistance to ultraviolet light and the like. When the sulfur link is 3 or greater, the sulfur linkages also impart flexibility to the polymer. The organic polyradical often imparts flexibility and elongation to the elastomer. When the organic polyradical has a valence of 3 or more (i.e., a branched polymer is formed ($S_4$)), high modulus and low cold flow are imparted to the polymer. The terminal groups Z impart curing characteristics and the desired molecular weight.

The curable polysulfide polymers employed in this invention most preferably contain from 50 to 85 percent, preferably 70 to 80 percent by weight sulfur and have a molecular weight, prior to curing, of 1,500 to 50,000, preferably 4,000 to 25,000, more preferably 4,000 to 12,000. It is further desirable that the curable polysulfide polymer contains a proportion of nonvinyl-group-containing terminal groups. Preferably, from 10 to 75 percent of said terminal groups do not contain vinyl moieties.

Said polymers are advantageously prepared according to the methods described in U.S. Patent No. 4,438,259. In a preferred method, the polymers are prepared by reacting a metal sulfide with elemental sulfur to prepare a metal polysulfide. The metal polysulfide is then reacted with at least one organic compound having a plurality of negatively charged functional groups which will split off upon reacting with a metal polysulfide, and a monofunctional (vinylaryl)alkyl compound which upon reacting gives rise to the desired terminal groups.

The metal polysulfide may be prepared by heating to reflux a mixture of a dissolved metal monosulfide, especially sodium sulfide and elemental sulfur. The metal polysulfide is subsequently reacted with the organic components by forming a mixture emulsion of the metal polysulfide (in aqueous solution) and the organics and heating to 25° to 90°C for 5 minutes to 2 hours.

Alternatively, the polysulfide polymer may be a noncurable polysulfide polymer. Such noncurable polysulfide polymer contains organic-terminal groups, of which none or only a small amount are (vinylaryl)alkyl. By "a small amount", it is meant that the noncurable polymer contains a proportion of (vinylaryl)alkyl terminal group which is less than the amount which enables the polymer to significantly cure. Examples of such noncurable polysulfide polymers are represented by the general formula :

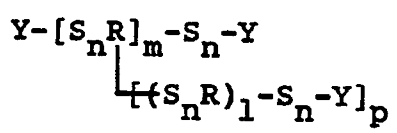

II

wherein n is a number from 2 to 8, l is zero or a positive number, m is a positive number, each R is independently an unsubstituted or inertly substituted organic polyradical with the radicals residing on carbon atoms, p is zero or a positive number which is the difference in the number of valence of R and 2, and each Y is independently chosen from the class consisting of (vinylaryl)alkyl and other inertly substituted noncrosslinking organic monoradicals, provided that the proportion of the terminal groups which are (vinylaryl)alkyl is less than that amount which enables the polymer to significantly cure. By "less than that amount which enables the polymer to significantly cure", it is meant that the polysulfide polymer, when fully "cured" by heating, is capable of cold flowing (i.e., when pressed onto a vertical surface it will flow under its own weight).

The terminal group Y can be any unsubstituted or inertly substituted noncrosslinking organic group or a mixture thereof with a minor amount of a (vinylaryl)alkyl group.

Preferably, the terminal group Y is a $C_1$-$C_{18}$ alkyl group, or an (aryl)alkyl group. More preferably, the terminal group is a benzyl group. The terminal group Y may contain diverse inert substituent groups which do not interfere with the preparation of the elastomer. The terminal group Y may comprise a minor portion of a (vinylaryl)alkyl group. Such (vinylaryl)alkyl groups generally comprise less than 10, preferably less than 5, more preferred less than 2 percent of the terminal groups in the noncurable polysulfide polymer.

Except for the proportion of (vinylaryl)alkyl terminal groups in these preferred noncurable polysulfide polymers, these noncurable polysulfide polymers generally and preferably contain the same constituent

structural groups as described in the foregoing discussion of the preferred curable polysulfide polymers. These noncurable polysulfide polymers are also advantageously prepared according to the methods described in the aforementioned U.S. Patent No. 4,438,259 modified so that the metal polysulfide is reacted with an inertly substituted monofunctional organic compound which contains a negatively charged functionality which will split off upon reacting with the metal polysulfide in the reaction mixture. By inertly substituted is meant that the monofunctional organic compound contains no substituent groups which chemically reacts under the conditions of the polymerization reaction. Exemplary inert substituents include, for example, alkyl groups. A wide variety of monofunctional organic compounds are usefully employed herein. The monofunctional organic compound may be, for example, an alkyl halide or sulfate, particularly a $C_2$-$C_{18}$ alkyl chloride or bromide. Halogenated or sulfated cycloakyl compounds are useful herein, as well as (aryl)alkyl halides, sulfates and the like. Of the foregoing, (aryl)alkyl halides are preferred.

The monofunctional organic compound is preferably one which is not capable of engaging in a curing reaction, or a mixture of such a noncross-linking compound with a (vinylaryl)alkyl halide or other compound which reacts with the metal polysulfide to form a terminal (vinylaryl)alkyl group. When such a mixture of monofunctional organic compounds is employed, the proportion of such mixture employed is such that the resulting polysulfide polymer is incapable of curing to a material which does not cold flow. In other words, for the purposes of this invention, it is preferred to have a polysulfide which is incapable of curing to form a highly cross-linked material. Of course, in evaluating the curing behavior of the polysulfide, such behavior refers to the curing characteristics of neat polysulfide elastomers. The inclusion of diverse additives may affect the mechanical properties of the polysulfide material such that even those containing very small amounts of (vinylaryl)alkyl terminal groups do not cold flow.

Most preferably, the monofunctional organic compound is an unsubstituted or inertly substituted benzyl halide, or a mixture thereof with an unsubstituted or inertly substituted vinylbenzyl halide.

Noncurable polysulfide polymers are formed by introducing, in addition to the monofunctional organic compound, an organic compound having a plurality of negatively charged functionalities attached to an aliphatic or cycloaliphatic carbon atoms, which functionalities will split off upon reacting with the metal sulfide in the reaction mixture. As used herein, the term "negatively charged functionality" means a functional group which will split off on reacting with the metal polysulfide to form an anionic species in solution. The functional group is not necessarily ionically bonded to the aliphatic hydrocarbon or (vinylaryl)alkyl compound, and, in fact, is generally covalently bonded thereto. The polymerization of polysulfides and polyfunctional organic compounds are well known in the art and is first described in U.S. Patent No. 1,890,191 to Patrick. Suitable polyfunctional compounds include alkyl dihalides, disulfates, diacetates and the like which will polymerize with the polysulfide and the monofunctional organic compound to form a linear polymer represented by the formula :

$$Y-(S_nR_a)_mS_nY$$

wherein m is a positive integer, n and Y are as defined hereinbefore and $R_a$ represents an organic diradical, with each valence residing on a carbon atom, which is the residue of the difunctional hydrocarbon after the splitting off of the negatively charged functionalities. In general, chlorides are preferred as the negatively charged functional group due to the facility of their reaction with metal polysulfides, their relatively low cost and high availability. The $R_a$ group, and correspondingly, the polyfunctional organic compound, may further contain substituents which are inert under the conditions of the polymerization reaction and may further incorporate linkages such as ether, sulfide, alkene or arylene into the chain. In general, those polyfunctional monomers previously known to react with metal polysulfides to form polymers therewith are also suitably employed in this invention. Preferred polyfunctional monomers include dichloroethane, 1,2,3-trichloropropane, bis-2-chloroethyl formal, bis-4-chlorobutyl ether, bis-4-chlorobutyl formal and 1,3-dichloro-2-propanol. Other polyfunctional monomers, which are illustrative of the wide scope of monomers suitable employed herein include, for example, bis(4-chloromethyl)phenyl ether, bis(4-chloroacetyl)phenyl ether, 2,5'-di(chloromethyl)-1,4-dioxane and diethylene glycol bis(chloroacetate), propylene dichloride and 1,4-dichloro-2-butene.

Trifunctional, tetrafunctional and pentafunctional organic compounds, such as 1,2,3-trichloropropane and the like, may be employed in conjunction with difunctional hydrocarbons and will polymerize with the polysulfide and the (vinylaryl)alkyl compound to form a branched polymer as represented by the general

structure :

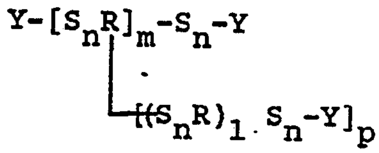

wherein l and m are positive integers, n and Y are as defined hereinbefore, each R is independently a polyvalent organic polyradical with each valence residing on a carbon atom, and p is a positive number which is the difference between the valence of R and two. It is noted that each R is the residue formed by the splitting off of the negatively charged functionalities from the respective difunctional and polyfunctional hydrocarbons.

The amount and degree of branching of the uncurable polysulfide polymer is selectively determined by the choice and relative proportion of the organic monomers employed in the reaction. By polymerizing polysulfides with a mixture of difunctional and tri-, tetra- or pentafunctional monomers, a branched chain may be formed as desired. In general, suitably branched polysulfide polymers are produced by employing from 90 to 99.5 weight percent of a difunctional monomer and from 10 to 0.5 weight percent of a monomer having at least three functionalities, said percentages being based on the total weight of all the polyfunctional monomers employed in the reaction. If higher modulus and lower cold flow in the cured polymer are desired, from 2 to 10 weight percent, preferably from 3 to 5 weight percent, of a monomer having at least three functionalities is employed, said percentages being based on the total weight of all the polyfunctional monomers employed in the reaction. If the polymer is to be employed as a sealant, from 0.5 to 4 weight percent of a mononer having at least 3 functionalities is beneficially employed.

The polyfunctional monomer is chosen such that the uncurable polysulfide polymer produced therefrom has the desired physical properties. Many of the beneficial properties of polysulfide polymers, such as resistance to oxygen permeation, water, ultraviolet light and solvents are generally attributable to the polysulfide segments of the polymer. When the sulfur link is three or more, the sulfur linkages also impart flexibility to the polymer. Properties such as high elongation, flexibility, and increased solubility may be selectively imparted to the polymers primarily by the organic segments. Thus, the properties of the uncurable polysulfide polymers can be selectively determined by the choice of organic monomers and the rank of the polysulfide segments. For example, a high sulfur polymer can be produced by employing low molecular weight organic compounds, such as bis-2-chloromethyl formal, 1,2,3-trichloropropane or ethylene dichloride. Similarly, polysulfides of varying rank may be employed to selectively vary the carbon to sulfur ratio in the polymeric chain.

The reaction is suitably carried out by heating the aqueous polysulfide solution from 25° to 90°C, preferably from 50° to 80°C, and adding the organic monomer and the monofunctional organic compound over a period of 5 minutes to 2 hours. The mixture is then heated at 25° to 90°C, preferably from 50° to 80°C, for 1 to 3 hours to form the desired organic-terminated polysulfide.

The noncurable polysulfide polymers employed in this invention have a theoretical molecular weight, as calculated from the relative proportion of the reactants employed in their preparation, of at least 490, preferably from 3,000 to 200,000, more preferably from 3,000 to 25,000.

The unsaturated organic elastomer employed herein contains a measurable proportion of ethylenic unsaturation. The saturated organic elastomer employed herein contains a saturated chain of the polymethylene type. The term "elastomer" is employed herein to refer to high molecular weight polymers having the ability to be stretched to at least twice their normal length and to retract rapidly to approximately their original length when released. As used herein, the term elastomer includes both natural rubber and synthetic rubbers. Such elastomer may be a thermosettable polymer, but most typically, is thermoplastic.

The unsaturated organic elastomer contains a measurable amount of ethylenic unsaturation. By "ethylenic unsaturation" it is meant the presence of a nonconjugated carbon carbon double bond. Preferably, this carbon-carbon double bond is reactive (i.e., will readily engage in reactions common to compounds containing such unsaturation). The ethylenic unsaturation may reside along the polymer backbone, as in the case of polybutadiene elastomers, or may reside in a pendant group or a side chain such as ethylene/propylene/non-conjugated diene terpolymer.

The unsaturated organic elastomer contains a measurable proportion of said ethylenic unsaturation. While not intending to limit the invention to any theory it is believed that the blend of the polysulfide polymer and the unsaturated organic elastomer has improved compatibility because of the vulcanization of the

organic elastomer with the polysulfide polymer. However, the decision to use an unsaturated or saturated organic elastomer depends primarily on the end use of the resin and the properties sought for that resin.

Generally, the unsaturated organic elastomer advantageously contains at least one carbon carbon double bond per 50 repeating units (mers) of the polymer. Preferably, there is at least one carbon carbon double bond per 10 mers, more preferably at least one carbon carbon double bond per 5 mers of the unsaturated organic polymer. Polymers such as polyisoprene, which contain essentially one carbon carbon double bond per repeating unit are also suitably employed herein.

The unsaturated organic elastomer may be a homopolymer of a monomer which polymerizes to a polymer containing ethylenic unsaturation. Alternatively, it may be a random copolymer of such a monomer with one or more other copolymerizable monomers which may or may not give rise to sites of ethylenic unsaturation in the polymer. In addition, the unsaturated organic elastomer may be a block copolymer having two or more discrete segments, one or more of which contain ethylenic unsaturation. Similarly, graft copolymers in which at least one of the backbone or grafted chains contain ethylenic unsaturation may be employed herein.

One suitable class of unsaturated organic elastomers includes the homopolymers and interpolymers and copolymers of conjugated dienes. Examples of such homopolymers include poly(butadiene), poly(isoprene), poly(1,4-hexadiene) and the like. Said conjugated dienes may optionally contain inert substituent groups such as alkyl groups or halogen atoms. An example of a halogenated conjugated diene is chloroprene. Polymers of such conjugated dienes contain residual double bonds on the polymer backbone, approximately one double bond per repeating unit of the polymer.

Also suitable are random copolymers of conjugated dienes with at least one other copolymerizable monomer, which copolymers are elastomers containing ethylenic unsaturation. Said other copolymerizable monomers include, for example, alkenes such as ethylene, propene, n-butylene, isobutylene and the like, vinyl aromatics such as styrene, vinyltoluene, t-butylstyrene, vinylnaphthalene and the like, acrylic esters such as alkyl acrylates and alkyl methacrylates ; halogenated alkenes such as vinyl chloride, vinylidene chloride, vinyl bromide and vinylidene bromide ; acrylonitrile and acrylamide. Of particular interest are the so-called nitrile rubbers which are random copolymers of acrylonitrile and butadiene ; styrene-butadiene rubbers ; the so-called butyl rubbers which are copolymers of isobutylene and isoprene ; and the halogenated analogs thereof.

In addition, homopolymers and copolymers of bicyclic dienes such as dicyclopentadiene, or norbornene. Terpolymers of ethylene and/or propylene with bicyclic dienes are also suitable.

The so-called polypenteneamers (i.e., polymers of cyclopentene and homologs thereof) are also useful herein.

In addition to the aforementioned homopolymers and copolymers, elastomeric block copolymers containing at least one segment having residual ethylenic unsaturation are suitably employed herein. Compatibility of the block copolymer and the polysulfide polymer is readily tested by mixing small amounts of the block copolymer and the polysulfide in the desired proportions according to the methods described hereinafter and observing whether phase separation or other indicia of incompatibility occur. Especially suitable are block copolymers of styrene and a conjugated diene, such as styrene/isoprene block copolymers or styrene/isoprene triblock copolymers.

Similarly, graft copolymers wherein the polymer backbone and/or the graft segment contains ethylenic unsaturation can be employed herein. As with the block copolymers, the graft copolymers suitably contain sufficient of the unsaturated segment to enable the polymer to be blended with the polysulfide elastomer.

The saturated organic elastomers employed in this invention contain a saturated chain of the polymethylene type. Saturated organic elastomers are blended with at least one organic-terminated polysulfide polymer to generally obtain a composition which exhibits improved physical properties similar to those exhibited when the polysulfide polymers are blended with unsaturated organic elastomers. The saturated organic elastomer may be chlorinated polyethylene or polyisobutylene.

Another aspect of this invention involves the blending of non-elastomeric polymers with at least one organic terminated polysulfide polymers. These blends exhibit improved physical properties including improved resilience, recovery compression set and lower modulus while maintaining general polysulfide properties. The non-elastomeric polymer may be polystyrene, low density polyethylene, high density polyethylene, linear low density polyethylene, or polychloromethyl oxirane. A suitable commercial polystyrene resin is sold under the trademark STYRON® by The Dow Chemical Company. The non-elastomeric polymer may also be copolymers of : an alkyl acrylate and acrylonitrile ; ethylene and vinyl acetate ; ethylene and propylene ; ethylene oxide and chloromethyl oxirane ; and vinyl chloride and vinylidene chloride.

Another aspect of this invention involves the blending of any combination of the previously discussed

organic polymers to obtain an organic polymer blend to blend with the polysulfide polymer. A preferred embodiment is the blending of a saturated organic elastomer, an unsaturated elastomer and at least one organic-terminated polysulfide polymer. Examples of this blending method are shown in Examples 7A, 7B and 8. Such blends exhibit improved physical properties similar to those exhibited when polysulfide polymers are blended with unsaturated or saturated organic elastomers.

All the foregoing unsaturated and saturated organic elastomers can be prepared using addition polymerization techniques well known in the art. For a general overview on the preparation of organic elastomers see the Kirk-Othmer Encyclopedia of Chemical Technology, 3rd Edition, Vol. 8, pages 446-640.

A suitable commercial polyisoprene is sold under the name Natsyn® 2205 by the Goodyear Chemical Company. An exemplary polyisobutylene is sold under the brand name Vistanex® by Exxon Chemicals. Suitable commercially available nitrile rubbers include those sold under the brand names Hycar® 1411 and Hycar® 1422, available from B. F. Goodrich Company. A suitable styrene/butadiene block copolymer is sold under the name Solprene® 1205 by Philips Petroleum Company. Kraton® D1102, a triblock styrene/butadiene polymer having a melt index of 6 is also usefully employed herein. This polymer is available from Shell Chemical. Also useful is Kraton® D1107 triblock styrene/isoprene polymer having a melt index of 9. This material is also available from Shell Chemical. A brominated butyl rubber and a chlorinated butyl rubber useful herein are commercially available from Exxon Chemicals.

The organic-terminated polysulfide polymer and the organic polymer are thoroughly mixed to form the blend of this invention. The blending is advantageously, but not necessarily, performed in the absence of an organic solvent. The blending can be accomplished at room temperature or at any elevated temperature at which the organic-terminated polysulfide polymer and/or organic polymer are softened. Preferably, the blending is performed at 20°-120°C. Blending is generally continued until the blend appears homogeneous. When a curable organic-terminated polysulfide polymer is employed, blending is preferably conducted while the polysulfide polymer is in the uncured state. The energy expended in the blending process generally promotes some, if not complete, curing of the curable organic-terminated polysulfide polymer. Such curing is especially present if the blending is conducted at elevated temperatures such as 50°-120°C.

Although it is not intended to limit the invention to any theory, it is believed that the energy expended in blending the polymer not only promotes physical intermixing of the polymers but also initiates a chemical reaction between the organic-terminated polysulfide polymer and the organic polymer. It is theorized that the energy of mixing causes cleavage of some of the sulfur sulfur bonds in the polysulfide, forming free radicals and also produces free radicals in the organic polymer. These free radicals then react with sites of unsaturation on the unsaturated organic elastomer, forming crosslinks between the polysulfide elastomer and the unsaturated organic elastomer. In the reaction with saturated organic elastomer, cross-links are formed due to free radical formation brought about by physical mastication. This result occurs even though there is no chemically reactive site on the saturated organic elastomer. It is believed that the formation of said crosslinkages in the blend is responsible for the unexpected compatibility of the organic-terminated polysulfide polymer and the organic polymer.

The blends of this invention exhibit beneficial and unexpected properties. The organic-terminated polysulfide polymer plasticizes the organic polymer, especially in those embodiments wherein the organic polymer is the major component of the blend. In addition, the organic-terminated polysulfide polymer can act as a vulcanizer for the unsaturated organic elastomer (i.e. the polysulfide polymer crosslinks the unsaturated organic elastomer). Thus, the organic-terminated polysulfide polymer can be employed in place of conventional plasticizers and vulcanizers for the unsaturated organic elastomer. However, the saturated organic elastomer is not vulcanizable. Block and graft polymer formation and crosslinking is still observed with the saturated organic polymer blends due to free radical formation. Additionally, the organic-terminated polysulfide polymer is vulcanizable and, therefore, curable through the vinyl groups by using elemental sulphur in the blend or through other reactive sites. The organic-terminated polysulfide polymer further imparts the desirable characteristics of improved adhesion and UV, ozone, solvent and water resistence to the blends, as compared to the organic polymer alone.

The blends of this invention also exhibit improved mechanical properties as compared to the polysulfide polymer alone. In general, the blends of this invention, even those in which the organic polymer is a minor component, exhibit higher tensile strength and more elastomeric behavior than do the polysulfide polymers.

In addition, the blends of this invention are more resilient, have improved compression set and/or exhibit lower notch sensitivity than the corresponding polysulfide polymer alone. In some instances the blend is also more adhesive and resistant to solvents, water and the like than the corresponding organic polymer alone.

In addition to the polysulfide polymer and the organic polymer, the blends of this invention may optionally contain various additives such as fillers, pigments, reinforcing agents, curing agents, plasterizers,

release agents, dyes, inhibitors and the like for their art recognized function. Because the polysulfide plasticizes and vulcanizes the unsaturated organic elastomer, additional plasticizer and vulcanizer are generally not necessary in this blend.

Also the curable or noncurable organic-terminated polysulfide polymer may be employed as the sealant but is preferably employed with pigments, fillers, synthetic rubbers and/or curing agents in order to import specific desirable properties to the sealant.

Inorganic and organic pigments and fillers are also advantageously employed in these blends and with the neat polysulfide polymers. Exemplary such pigments and fillers include carbon black, titanium dioxide, calcium carbonate, colored pigments like cadmium sulfide, clay, asbestos, wood flour, zinc oxide and the like. While the particular amount of said pigment or filler employed varies somewhat depending on the particular properties desired as well as the molecular weight and composition of the polysulfide, in general such pigment or filler from 0 to 95, preferably from 10 to 60 percent by weight of the filled blend of this invention. When the neat polysulfide polymer is employed as a sealant from 0 to 200 or more, preferably from 10 + 50 parts by weight filler or pigment are employed per 100 parts polysulfide polymer.

In general, increased levels of filler or pigment increase the tensile strength of the cured sealant. In addition, the low molecular weight polysulfide polymers or polymers with relatively low amounts of (vinylaryl)alkyl terminal groups will typically not cure or only cure to sealants having lower strength or resilience. Accordingly, the amount of pigment or filler employed can vary with the particular polysulfide to obtain the desired properties.

The blends of this invention are useful in preparing tough solvent-resistant articles such as gaskets, hoses, tubing, membranes, barrier films, weather resistant films, adhesive tapes, hot melt adhesive, hot melt sealant, and the like. The utility of the blends of this invention will, of course, depend somewhat on the particular composition thereof. For example, blends containing relatively small amounts of polysulfide polymer may be employed in applications for which the organic polymer alone is conventionally employed. In such applications, the blend of this invention will typically exhibit improved adhesion as well as greater solvent, water and ultraviolet light resistance. Similarly, the blend of this invention, having a high proportion of polysulfide polymer is advantageously employed as an adhesive/sealant or in like compositions for which conventional polysulfide polymers are employed.

In addition to the foregoing, accelerators, free radical initiators, surfactants, dyes and other additives may be employed in the sealant for their art recognized function.

While the sealant may be applied to the joint or crack while cold, it is sometimes preferred to use heat in order to soften the sealant, decrease the viscosity and/or to increase the binding of the sealant to the asphalt or concrete. When heat is used to apply the sealant, the heat also serves to cure those sealants employing a curable polysulfide elastomer. The properties of the sealant can be varied somewhat by the choice of additives and fillers in order to obtain the desired characteristics of melting or softening point, tackiness, mechanical properties, curing and the like. Increased tackiness, lower tensile strength, reduced resilience and lower softening point are generally exhibited in sealants containing a relatively high proportion of the polysulfide elastomer. Highly filled materials generally exhibit relatively higher softening points and are usually tougher and more resilient than unfilled sealants. The sealants of this invention which contain organic elastomers are highly resilient. By the choice of the type and proportion of the components employed in the sealants of this invention, the sealant can often be adapted to meet the particular requirements of the application for which it will be employed.

A major advantage of the sealant of this invention is the ease with which it is applied. These sealants may be applied simply by placing a quantity of the cold sealant in contact with the surface of the crack or joint to be sealed. Preferably, the surfaces of the cracks are cleaned to remove loose particles, water and the like before applying the sealant. When applied to the crack or joint cold, adhesion of the sealant to the surface of the crack or joint develops upon the infusion of small amounts of energy. Often the adhesion develops at room temperature with the addition of a small amount of mechanical energy. For example, a crack in a concrete highway is advantageously sealed by filling the crack with the cold sealant of the invention. The subsequent heating and pressure action of traffic on the highway can provide the energy needed to completely adhere the sealant to the concrete substrate.

Improved adhesion of the sealant to the substrate immediately upon application is generally effected by heating the sealant slightly before or after applying. Heating also serves to soften the sealant and reduce its viscosity. A curable polysulfide elastomer will cure (i.e., become cross-linked upon heating). Because the sealants of this invention can be heated for application, they can be used with equipment conventionally used for applying hot sealants to concrete or asphalt structures, such as a hot melt gun, pumping equipment and the like.

A further advantage to the method and sealants of this invention is that the structure sealed therewith

is ready for use almost immediately after the application of the sealant. Upon application, these sealants do not require a period of time for setting, curing or cooling before use. This advantage is of significant importance in highway repair, because the period of time during which the highway must be closed for repairs is significantly reduced.

The method of this invention encompasses the sealing of joints or cracks in concrete and/or asphalt structures. By "joints or cracks in concrete or asphalt structures" is meant any discontinuity or gap between a concrete or asphalt member of such structure and any adjacent member thereof. Said adjacent member may be concrete or asphalt or any other solid material to which the polysulfide adheres, including wood, plastic, rubber, metal, glass or other surface. Preferably, the adjacent surface is also asphalt or concrete. The method of this invention is particularly suitable for sealing joints or cracks in concrete structures such as roads, highways, parking lots, driveways, sidewalks, masonry and the like. Of special interest are joints between concrete road beds and adjacent asphalt shoulders.

The following examples are provided to illustrate the invention but are not intended to limit the scope thereof. All parts and percentages are by weight unless otherwise indicated. The curable polysulfides of the Z-type are exemplified in Examples 1 to 7, 9 to 12 and 13 (samples 1 and 3) and the polysulfides of the Y-type which are non-curable are exemplified in Examples 8, 13 (sample 2), 14 and 15.

Example 1

The polysulfide polymer employed in this example and Examples 2-6 and 9-12 was prepared by dissolving 27.7 weight percent (based on total weight of reactants) disodium sulfide in water, adding 34.2 weight percent precipitated sulfur and heating at reflux for 1 hour to produce sodium polysulfide. Emulsifiers were then added to the aqueous phase, and 2.5 weight percent vinylbenzyl chloride, 2 weight percent benzyl chloride, 31.7 weight percent ethylene dichloride, and 1.9 weight percent 1,2,3-trichloropropane were added over a 1 hour period. The mixture was then heated to 70°C for 1 more hour. The emulsion was broken and a viscous liquid was recovered. This sample contains 78 percent sulfur and has a theoretical molecular weight of 6,000.

A 30 part portion of the polyisoprene (Natsyn® 2205 sold by the Goodyear Chemical Company) was masticated at 30°C in a Brabender Mixer until softened. To the softened polyisoprene was then added 100 parts of the polysulfide polymer. The polyisoprene and the polysulfide elastomer were masticated in the Brabender mixer until the blend assumed a uniform appearance. The resulting blend was then formed into a 1/8 inch (0.3 cm) thick film. The film is then cut into 4 inch by 4 inch by 1/8 inch (10 cm by 10 cm by 0.3 cm) tensile bars for evaluation. The tensile strength of the film is evaluated on an Instron tensile tester. A maximum tensile strength of 13.2 lbs./in$^2$ (91 kPa) is exhibited. By comparison, a similar film prepared from the polysulfide elastomer alone exhibits a maximum tensile strength of only 7.7 lbs/in$^2$ (53 kPa).

Another blend was prepared in like manner from 100 parts of polysulfide polymer, 30 parts polyisoprene and 30 parts carbon black. A film of the blended material was tested on the Instron and found to have a maximum tensile strength of 42.9 lbs/in$^2$ (296 kPa).

Example 2

A blend was prepared from 100 parts by weight polysulfide polymer and 30 parts by weight of a triblock styrene/butadiene polymer containing 28 percent styrene and 72 percent butadiene, sold commercially under the brand name Kraton® D1102 by Shell Chemical Corporation. In forming the blend, the rubber was added to the Brabender Mixer at 125°C and softened, at which time the polysulfide polymer was added and mixed with the rubber until the blend appeared homogeneous. This blend was tested on the Instron as described in Example 1 and found to exhibit a maximum tensile strength of 47.8 lbs/in$^2$ (329.5 kPa). A film of this blend was stretched to 200 percent elongation and released. Upon release, the film retracted rapidly and recovered 94 percent of said elongation. Another film was elongated to 800 percent of its original length and released. Upon release, the film retracted by 85 percent.

Example 3

The procedure of Example 2 was repeated, this time employing a triblock styrene/isoprene triblock polymer containing 14 percent styrene and 86 percent isoprene, commercially available under the brand name Kraton® D1107 from the Shell Chemical Corporation. Upon testing on the Instron, this blend exhibited a maximum tensile strength of 39.1 lbs/in$^2$ (269.5 kPa). After elongation to 200 percent of its original length, a film retracted by 94 percent. Another film, after elongation to 800 percent of its original length, retracted

by 64 percent.

Example 4

A blend was prepared according to the method of Example 2, this time employing a linear diblock styrene butadiene polymer containing 25 percent styrene, 75 percent butadiene, commercially available under brand name Solprene® 1205 from the Phillips Petroleum Company. Upon testing on the Instron, this material exhibited a maximum tensile strength of 20 lbs/in$^2$ (137.9 kPa).

Example 5

A blend was prepared according to the procedure described in Example 2, this time employing a nitrile rubber containing 40 percent acrylonitrile, sold commercially under the brand name Hycar® 1411 by the B. F. Goodrich Company. Upon testing on the Instron, this material exhibited a maximum tensile strength of 36.4 lbs/in$^2$ (250.9 kPa). A film of this material retracted by 88 percent after elongation to 400 percent of its original length. Another film of this material retracted by 40 percent after elongation to 800 percent of its original length.

Example 6

A blend was formed according to the process of Example 1, this time employing a nitrile rubber containing 33 percent acrylonitrile, commercially available under the brand name Hycar® 1422 from B. F. Goodrich. Films from this material exhibited a maximum tensile strength of 28.8 lbs/in$^2$ (198.5 Kpa). A film prepared from this blend recovered by 55 percent after elongation to 400 times its original length and by 10 percent after elongation to 800 percent of its original length.

Example 7

Using the general procedure described in Example 1, a polysulfide polymer was prepared from the following reagents :

$Na_2S$ (as nonahydrate) 27.8 weight percent
Sulfur 34.3 weight percent
Vinylbenzyl chloride 2.2 weight percent
Benzyl chloride 1.9 weight percent
Ethylene chloride 32.8 weight percent

The resulting polysulfide polymer is linear, curable and has a theoretical number average molecular weight of 4,000.

The polysulfide was blended into Sample Nos. 7a, 7b and 7c according to the general procedure described in Example 2. The components of the blend are as indicated in the following table.

| Component | Sample No. (Parts) 7A | 7B | 7C |
|---|---|---|---|
| Polysulfide Elastomer | 100 | 100 | 100 |
| Kraton(R) B1107 | 5 | 10 | 10 |
| Vistanex(R) L-80[1] | 5 | 5 | -- |
| Carbon Black N762 | 30 | 30 | 15 |
| Carbon Black N234 | -- | -- | 15 |
| ZnO | 2.5 | 2.5 | 2.5 |
| Peak Tensile (psi) | -- | 14 | 66.3 |
| [kPa] | | [96.5] | [457] |
| Tensile @ 800% elongation | -- | 3.6 | 20.8 |

[1]Polyisobutylene, available from Exxon Chemicals.

Sample No. 7A passed two cycles of the extension test described in ASTM D-1191-64. After two cycles of the test, the evaluation was terminated without failure of the sealant.

Example 8

Using the general procedure described in Example 1, a polysulfide elastomer was prepared from the following reagents :

$Na_2S$ (as nonhydrate) 28.3 weight percent
Sulfur 34.8 weight percent
Vinylbenzyl chloride 0.9 weight percent
Benzyl chloride 0.7 weight percent
Ethylene dichloride 35.3 weight percent

Using the general procedure described in Example 1, 100 parts of this polysulfide elastomer were blended with 5 parts Vistanex® L-80, 5 parts Kraton® D1107, 30 parts carbon black and 2.5 parts zinc oxide. The blend exhibits a peak tensile of 33.9 psi (233.7 kPa) and a tensile at 800 percent elongation of 7.0 psi (48 kPa).

Example 9

A blend was prepared according to the procedure described in Example 1, this time employing 30 parts of polyisobutylene, commercially available under the brand name Vistanex® L-80 from Exxon Chemicals. A film from this blend exhibited a tensile of 16.3 lbs/in$^2$ (112.4 kPa) at 800 percent elongation and a yield point of 100 percent elongation of 10.2 lbs/in$^2$ (70.3 kPa).

Example 10

A blend was prepared according to the procedure described in Example 1, this time employing 30 parts polystyrene (the polystyrene used is sold by The Dow Chemical Company under the trademark STYRON® 60-75). A film from this blend exhibited a peak tensile of 95.5 lbs/in$^2$ (658.5 kPa) and a tensile of 28.7 lbs/in$^2$ (197.7 kPa) at 800 percent elongation.

Example 11

A blend was prepared according to the procedure described in Example 1, this time employing 15 parts high density polyethylene. A film from this blend exhibited a peak tensile of 25.1 $lbs/in^2$ (173 kPa) at 800 percent elongation.

Example 12

A blend was prepared according to the procedure described in Example 1, this time employing 30 parts polypropylene, commercially available under the brand name Profax® 6323 from Hymont Corporation. Films from this blend exhibited a peak tensile of 31.2 $lbs/in^2$ (215 kPa) and a tensile of 25.9 $lbs/in^2$ (178.6 kPa) at 800 percent elongation.

Example 13

Polysulfide Polymer Sample No. 1 was prepared by dissolving 27.7 weight percent disodium sulfide (based on total weight of all reactants) in water, adding 34.2 weight percent precipitated sulfur and heating at reflux for 1 hour to produce the sodium polysulfide. Emulsifiers were then added to the aqueous phase and 2.5 parts vinylbenzyl chloride, 2 parts benzyl chloride, 31.7 parts ethylene dichloride, and 1.9 parts 1,2,3-trichloropropane were added over a 1 hour period. The mixture was then heated to 70°C for another hour. The emulsion was broken and a viscous liquid was recovered. This sample contains 78 percent sulfur and has a theoretical molecular weight of 6,000.

Polysulfide Polymer Sample No. 2 was prepared in like manner using 28.3 parts disodium sulfide, 34.8 parts sulfur, 0.9 part vinylbenzyl chloride, 0.7 part benzyl chloride and 35.3 parts ethylene dichloride. The product contains 80.6 percent sulfur and has a theoretical molecular weight of 10,000.

Polysulfide Polymer Sample No. 3 was prepared in like manner using 27.8 parts $Na_2S$ (as nonahydrate), 34.3 parts sulfur, 2.2 parts vinylbenzylchloride, 1.9 parts benzyl chloride and 33.8 parts ethylene dichloride. The resulting polysulfide is linear and has a theoretical molecular weight of 4,000.

Sealant Formulation Nos. 1-6 were prepared from the components listed in Table I following.

TABLE I

| Sealant | Formulation Sample No. 1 | 2 | 3 | 4 | 5 | 6 |
|---|---|---|---|---|---|---|
| Polysulfide Elastomer No. 1 | 100 | 100 | -- | -- | 100 | -- |
| Polysulfide Elastomer No. 2 | -- | -- | 100 | 100 | -- | -- |
| Polysulfide Elastomer No. 3 | -- | -- | -- | -- | -- | 100 |
| Kraton(R) D1107[1] | 5 | 10 | 10 | 10 | -- | 5 |
| $CaCO_3$ | -- | 30 | 30 | 30 | -- | -- |
| Carbon Black[4] N642 | 30 | -- | -- | -- | -- | -- |
| Carbon Black N234 | -- | 5 | 5 | 3 | 26 | -- |
| Carbon Black N762 | -- | -- | -- | -- | -- | 30 |
| ZnO | 5 | 5 | 5 | -- | -- | 2.5 |
| Altox[2](R) | 1 | 1 | 1 | -- | -- | -- |
| Morfax[3](R) | -- | -- | -- | -- | 5 | -- |
| Stearic Acid | -- | 1 | 1 | -- | -- | -- |
| t-Butyl Perbenzoate | -- | -- | -- | -- | 1 | -- |
| Exxon Poly-isobutylene | -- | -- | -- | -- | -- | 5 |

[1]A triblock styrene/isoprene polymer containing 14% styrene, having a melt index of 9, available from Shell Chemical Co.

[2]Benzothiazyl disulfide, sold by R. T. Vanderbilt Co.

[3]A commercial vulcanizing agent available from R. T. Vanderbilt Co.

[4]Commercially available, sold by Cabot Corporation.

Blending of components was done on a Brabender Mixer. The rubber (in Formulation Nos. 1-4 and 6) was masticated on the Brabender before adding the polysulfide and other components. After the components were blended, mastication was continued until the blend was uniform in appearance.

Molded 4 inch by 4 inch by 1/8 inch (10 cm x 10 cm x 0.3 cm) films were formed from each of the Sealant Formulation Nos. 1-6 and tested on the Instron Tensile Tester for yield tensile strength, elongation and tensile and maximum elongation. Results are as reported in Table II following :

TABLE II

| | Sealant Formulation No. 1 | 2 | 3 | 4 | 5 | 6 |
|---|---|---|---|---|---|---|
| Yield Tensile, psi (kPa) | ND | 53.2 (366.8) | 26.8 (184.8) | 29.9 (206.2) | 33.1 (228.2) | 6 (41.3) |
| Elongation at Break, %[1] | 800 | 800 | 50 | 800 | 800 | 33.9 |
| Tensile at Maxium Elongation, psi[2] | 39.1 (269.6 kPa) | 41.2 (284 kPa) | ND | 23.7 (163.4 kPa) | 7.5 (51.7 kPa) | 7.0 (48 kP |

ND = Not determined

[1]All tests end at 800% elongation if the film is not broken.

[2]Determine at 800% elongation.

Sealant Formulation No. 5 was used to seal cracks in concrete and asphalt. The sealant was formed into a long "rope" which rope was placed into the cracks and contacted with the edges thereof. Adhesion to the concrete and asphalt was excellent and the cracks were completely sealed. One year after application, the seals remain intact and adherent to the substrate.

Sealant Formulation No. 5 was also used to bond together two 1 inch x 2 inch x 4 inch (2.5 cm x 5 cm x 10 cm) concrete blocks. Two such blocks were bonded together by covering one 1 inch x 2 inch (2.5 cm x 5 cm) face of the block with the sealant formulation, at 50°C, and allowing the sealants to cool. After cooling, excellent adhesion of the sealant to the block was seen. Multiple 180° twists and bends of the blocks relative to each other failed to break the bond.

Sealant Formulation Sample Nos. 1-4 and 6 were evaluated in like manner and also exhibit excellent adhesion to concrete and asphalt.

Example 14

A polysulfide polymer was prepared according to the general procedure described in Example 13, using 27.8 parts $Na_2S$, 34.3 parts sulfur, 0.5 parts vinylbenzylchloride, 3.7 parts benzyl chloride, 33.2 parts ethylene dichloride and 0.5 parts 1,2,3 trichloropropane.

100 parts of this elastomer were blended with 20 parts Exxon butyl rubber 065, 15 parts carbon black and 2.5 parts zinc oxide, using a Brabender as described in Example 13.

The resulting sealant was capable of being extruded at 50°C at 60 psi (414 kPa) pressure. Accordingly, the sealant can be used in hot melt guns and similar apparatus.

Example 15

A 100 part portion of polysulfide elastomer Sample No. 2 (Example 13) was blended with 10 parts Exxon butyl rubber 065, 20 parts carbon black and 2.5 parts zinc oxide. The resulting sealant was firm and rigid when formed into rods. This sealant was also capable of being extruded, as in a hot melt gun, for application. Alternatively, however, this sealant can be applied simply by placing a quantity thereof into contact with the edges of the crack or joint to be sealed.

## Claims

1. A polymer composition comprising a blend of at least one organic-terminated polysulfide polymer and an organic polymer which is not an organic-terminated polysulfide, characterized in that said polysulfide polymer is represented by the general formulae

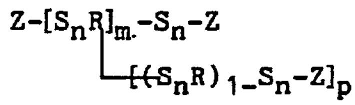 I or 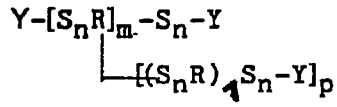 II

wherein n is a number from 2 to 8, l is zero or a positive integer, m is a positive integer, each R is independently an unsubstituted or inertly substituted organic polyradical with the radicals residing in carbon atoms, p is zero or a positive number which is the difference between the number of valence of R and 2, and each Y and Z is independently chosen from the class consisting of (vinylaryl)alkyl and inertly substituted noncross-linking organic monoradicals provided that at least a portion of Z is (vinylaryl)alkyl ; said organic polymer selected from the class consisting of an ethylenically unsaturated elastomer, a saturated elastomer that contains a saturated chain of the polymethylene type, a non-elastic organic polymer and a mixture thereof ; and wherein said polysulfide polymer is present in an amount of from 1 to 99 percent by weight based on the total weight of the polymer in the blend.

2. The polymer composition of Claim l, characterized in that said polysulfide polymer is a curable polymer of the formula

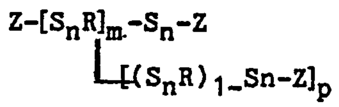 I

wherein R, Z, l, m, n, and p are as defined hereinbefore, and wherein sufficient portion so that said copolymers are curable of the terminal groups of said polysulfide polymer are (vinylaryl)alkyl.

3. The polymer composition of Claim l, characterized in that said polysulfide polymer is a non-curable polymer of the formula

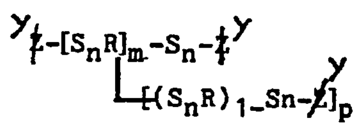 II

wherein R, Y, l, m, n and p are as defined hereinbefore, and wherein the proportion of terminal groups which are (vinylaryl)alkyl is less than that amount which enables the polysulfide polymer to significantly cure.

4. The polymer composition of Claim 2 or Claim 3, characterized in that said ethylenically unsaturated elastomer contains at least one carbon carbon double bond per 50 repeating units of said unsaturated elastomer.

5. The polymer composition of Claim 2 or Claim 3 characterized in that said unsaturated organic elastomer is a homopolymer or copolymer of a conjugated diene.

6. The polymer composition of Claim 2 or Claim 3 characterized in that said unsaturated elastomer is a block or graft copolymer of a conjugated diene.

7. The polymer composition of Claim 2 or Claim 3 characterized in that said unsaturated elastomer is a polymer of a bicyclic diene with ethylene and/or propylene.

8. The polymer composition of Claim 2 or Claim 3 characterized in that said unsaturated elastomer is a polypenteneamer.

9. The polymer composition of Claim 2 or Claim 3 characterized in that said saturated organic elastomer is a polymer of chlorinated polyethylene or polyisobutylene.

10. The polymer composition of Claim 2 or Claim 3 characterized in that said organic polymer is a mixture of unsaturated and saturated organic elastomers.

11. The polymer composition of Claim 2 or Claim 3 characterized in that said non-elastomeric polymer is polystyrene, low density polyethylene, high density polyethylene, linear low density polyethylene, or

polychloromethyl oxirane.

12. The polymer composition of Claim 2 or Claim 3 characterized in that said non-elastomeric polymer is a copolymer of : an alkyl acrylate and acrylonitrile ; ethylene and vinyl acetate ; ethylene and propylene; ethylene oxide and chloromethyl oxirane ; and vinyl chloride and vinylidene chloride.

13. A method of sealing cracks or joints in concrete or asphalt structures by applying a sealant to said cracks or joints characterized in that the polymer composition of Claim 1 is employed as the sealant in an amount sufficient to seal said cracks or joints.

14. The method of Claim 13, characterized in that said sealant is melted or softened prior to application to said cracks or joints.

15. The method of Claim 14, characterized in that said sealant includes an inorganic pigment or filler.

**Ansprüche**

1. Eine Polymerzusammensetzung, umfassend eine Mischung mindestens eines Polysulfidpolymers mit organischen endständigen Gruppen und eines organischen Polymers, das kein Polysulfid mit organischen endständigen Gruppen ist, **dadurch gekennzeichnet,** daß das Polysulfidpolymer durch die allgemeinen Formeln

$$\begin{array}{l} Z-[S_nR]_m-S_n-Z \\ \quad [(S_nR)_l-S_n-Z]_p \end{array} \quad I \quad \text{oder} \quad \begin{array}{l} Y-[S_nR]_m-S_n-Y \\ \quad [(-S_nR)_l-S_n-Y]_p \end{array} \quad II$$

dargestellt wird, worin n eine Zahl von 2 bis 8, l 0 oder eine positive ganze Zahl, m eine positive ganze Zahl, jedes R unabhängig ein unsubstituiertes oder inert substituiertes organisches Polyradikal ist, wobei die Radikale in Kohlenstoffatomen liegen, p 0 oder eine positive Zahl ist, die die Differenz zwischen der Zahl der Valenz von R und 2 ist, und jedes Y und Z unabhängig ausgewählt ist aus der Klasse bestehend aus Vinylarylalkyl und inert substituierten nicht quervernetzenden organischen Monoradikalen, vorausgesetzt, daß mindestens ein Teil von Z Vinylarylalkyl ist, wobei das organische Polymer ausgewählt ist aus der Klasse bestehend aus einem ethylenisch ungesättigten Elastomer, einem gesättigten Elastomer, das eine gesättigte Kette vom Polymethylentyp enthält, einem nicht elastischen organischen Polymer und einer Mischung davon ; und worin das Polysulfidpolymer in einer Menge von 1 bis 99 Gew.-% auf Basis des Gesamtgewichts des Polymers in der Mischung vorhanden ist.

2. Polymerzusammensetzung nach Anspruch 1, **dadurch gekennzeichnet,** daß das Polysulfidpolymer ein härtbares Polymer der Formel

$$\begin{array}{l} Z-[S_nR]_m-S_n-Z \\ \quad [(S_nR)_l-S_n-Z]_p \end{array} \quad I$$

ist, worin R, Z, l, m, n und p wie oben definiert sind und worin ein ausreichender Anteil, so daß die Copolymere härtbar sind, der endständigen Gruppen des Polysulfidpolymers Vinylarylalkyl sind.

3. Polymerzusammensetzung nach Anspruch 1, **dadurch gekennzeichnet,** daß das Polysulfidpolymer ein nicht härtbares Polymer der Formel

$$\begin{array}{l} Y-[S_nR]_m-S_n-Y \\ \quad [(-S_nR)_l-S_n-Y]_p \end{array} \quad II$$

ist, worin R, Y, l, m, n und p wie oben definiert sind, und worin der Anteil von Endgruppen, die Vinylarylalkyl sind, weniger ist als die Menge, die es dem Polysulfid-polymer ermöglicht, signifikant zu härten.

4. Polymerzusammensetzung nach Anspruch 2 oder 3, **dadurch gekennzeichnet**, daß das ethylenisch ungesättigte Elastomer mindestens eine Kohlenstoff-Kohlenstoff-Doppelbindung pro 50 sich wiederholende Einheiten des ungesättigten Elastomers enthält.

5. Polymerzusammensetzung nach Anspruch 2 oder 3, **dadurch gekennzeichnet**, daß das ungesättigte organische Elastomer ein Homopolymer oder Copolymer eines konjugierten Diens ist.

6. Polymerzusammensetzung nach Anspruch 2 oder 3, **dadurch gekennzeichnet**, daß das ungesättigte Elastomer ein Block- oder Pfropfcopolymer eines konjugierten Diens ist.

7. Polymerzusammensetzung nach Anspruch 2 oder 3, **dadurch gekennzeichnet**, daß das ungesättigte Elastomer ein Polymer eines bicyclischen Diens mit Ethylen und/oder Propylen ist.

8. Polymerzusammensetzung nach Anspruch 2 oder 3, **dadurch gekennzeichnet**, daß das ungesättigte Elastomer ein Polypentenamer ist.

9. Polymerzusammensetzung nach Anspruch 2 oder 3, **dadurch gekennzeichnet**, daß das gesättigte organische Elastomer ein Polymer aus chloriertem Polyethylen oder Polyisobutylen ist.

10. Polymerzusammensetzung nach Anspruch 2 oder 3, **dadurch gekennzeichnet**, daß das organische Polymer eine Mischung von ungesättigten und gesättigten organischen Elastomeren ist.

11. Polymerzusammensetzung nach Anspruch 2 oder 3, **dadurch gekennzeichnet**, daß das nicht elastomere Polymer Polystyrol, Polyethylen niedriger Dichte, Polyethylen hoher Dichte, lineares Polyethylen mit niedriger Dichte oder Polychlormethyloxiran ist.

12. Polymerzusammensetzung nach Anspruch 2 oder 3, **dadurch gekennzeichnet**, daß das nicht elastomere Polymer ein Copolymer ist von : einem Alkylacrylat und Acrylnitril ; Ethylen und Vinylacetat ; Ethylen und Propylen ; Ethylenoxid und Chlormethyloxiran ; und Vinylchlorid und Vinylidenchlorid.

13. Verfahren zum Abdichten von Sprüngen oder Verbindungen in Beton- oder Asphaltstrukturen durch Aufbringen eines Dichtungsmittels auf die Sprünge oder Verbindungen, **dadurch gekennzeichnet**, daß die Polymerzusammensetzung von Anspruch 1 als das Dichtungsmittel in einer ausreichenden Menge verwendet wird, um die Sprünge oder Verbindungen abzudichten.

14. Verfahren nach Anspruch 13, **dadurch gekennzeichnet**, daß das Dichtungsmittel geschmolzen oder erweicht wird vor der Aufbringung auf die Sprünge oder Verbindungen.

15. Verfahren nach Anspruch 14 **dadurch gekennzeichnet**, daß das Dichtungsmittel ein anorganisches Pigment oder einen Füllstoff einschließt.

## Revendications

1. Composition de polymères comprenant un mélange d'au moins un polymère polysulfure à terminaisons organiques et d'un polymère organique qui n'est pas un polysulfure à terminaisons organiques, caractérisée en ce que ledit polymère polysulfure est représenté par les formules générales

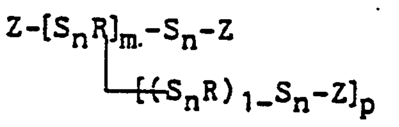 I ou 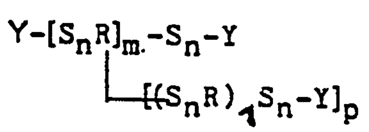 II

dans lesquelles n est un nombre de 2 à 8, l vaut zéro ou un entier positif, m est un entier positif, chaque R représente, indépendamment, un radical polyvalent organique non-substitué ou substitué par des substituants inertes, les liaisons de valence de ce radical étant placées sur des atomes de carbone, p vaut zéro ou un nombre positif qui est la différence entre la valence de R et 2, et chaque Y ou Z est choisi, indépendamment, dans la classe comprenant les radicaux (vinylaryl)alkyle et les radicaux monovalents organiques non-réticulants substitués par des groupes inertes, sous réserve qu'au moins une partie de Z soit (vinylaryl)alkyle ; ledit polymère organique étant choisi dans la classe comprenant un élastomère à insaturation éthylénique, un élastomère saturé qui renferme une chaîne saturée de type polyméthylène, un polymère organique non-élastique et un mélange de ceux-ci ; et dans laquelle ledit polymère polysulfure est présent à raison de 1 à 99% en poids par rapport au poids total de polymère dans le mélange.

2. Composition de polymères de la revendication 1, caractérisée en ce que ledit polymère polysulfure est un polymère durcissable de formule

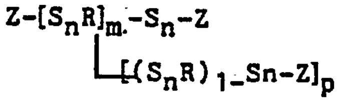

I

dans laquelle R, Z, l, m, n et p sont définis comme ci-dessus, et dans laquelle une partie suffisante, pour que lesdits copolymères soient durcissables, des groupes terminaux dudit polymère polysulfure est formée de (vinylaryl)alkyle.

3. Composition de polymères de la revendication 1, caractérisée en ce que ledit polymère polysulfure est un polymère non-durcissable de formule

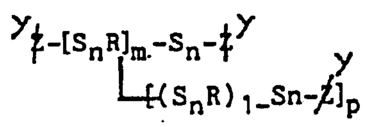

II

dans laquelle R, Y, l, m, n et p sont définis comme ci-dessus, et dans laquelle la proportion de groupes terminaux qui sont des groupes (vinylaryl)alkyle est inférieure à la quantité permettant au polymère polysulfure de subir un durcissement significatif.

4. Composition de polymères de la revendication 2 ou 3, caractérisée en ce que ledit élastomère à insaturation éthylénique contient au moins une double liaison carbone-carbone pour 50 motifs répétitifs dudit élastomère insaturé.

5. Composition de polymères de la revendication 2 ou 3, caractérisée en ce que ledit élastomère organique insaturé est un homopolymère ou copolymère d'un diène conjugué.

6 . Composition de polymères de la revendication 2 ou 3, caractérisée en ce que ledit élastomère insaturé est un copolymère séquencé ou greffé d'un diène conjugué.

7. Composition de polymères de la revendication 2 ou 3, caractérisée en ce que ledit élastomère insaturé est un polymère d'un diène bicyclique avec l'éthylène et/ou le propène.

8. Composition de polymères de la revendication 2 ou 3, caractérisée en ce que ledit élastomère insaturé est un polypentènamère.

9. Composition de polymères de la revendication 2 ou 3, caractérisée en ce que ledit élastomère organique saturé est un polymère polyéthylène chloré ou polyisobutylène.

10. Composition de polymères de la revendication 2 ou 3, caractérisée en ce que ledit polymère organique est un mélange d'élastomères organiques insaturés et saturés.

11. Composition de polymères de la revendication 2 ou 3, caractérisée en ce que ledit polymère nonélastomère est un polystyrène, un polyéthylène de basse densité, un polyéthylène de haute densité, un polyéthylène basse densité linéaire ou un poly(chlorométhyloxirane).

12. Composition de polymères de la revendication 2 ou 3, caractérisée en ce que ledit polymère nonélastomère est un copolymère de : un acrylate d'alkyle et l'acrylonitrile ; l'éthylène et l'acétate de vinyle ; l'éthylène et le propène ; l'oxyde d'éthylène et le chlorométhyloxirane ; ou le chlorure de vinyle et le chlorure de vinylidène.

13. Procédé pour boucher des fissures ou des joints dans des structures de béton ou d'asphalte par application d'un matériau d'obturation auxdites fissures ou auxdits joints, caractérisé en ce que la composition de polymères de la revendicaticn 1 est utilisée comme matériau d'obturation, en une quantité suffisante pour boucher lesdites fissures ou lesdits joints.

14. Procédé de la revendication 13 caractérisé en ce que ledit matériau d'obturation est fondu ou ramolli avant son application auxdites fissures ou auxdits joints.

15. Procédé de la revendication 14, caractérisé en ce que ledit matériau d'obturation renferme un pigment minéral ou une charge.